# EUROPEAN PATENT SPECIFICATION

(11) **EP 2 816 830 B1**
(45) Date of publication and mention of the grant of the patent: **30.08.2017**
(21) Application number: 13819794.2
(22) Date of filing: 10.07.2013
(51) Int. Cl.: H04W 76/04, H04W 8/24, H04W 52/02

(54) **MOBILE COMMUNICATION METHOD**
MOBILKOMMUNIKATIONSVERFAHREN
PROCÉDÉ DE COMMUNICATION MOBILE

(30) Priority: 20.07.2012 JP 2012161528
(43) Date of publication of application: 24.12.2014
(73) Proprietor: NTT DOCOMO, INC., Chiyoda-ku Tokyo 100-6150 (JP)
(72) Inventor: MORIOKA, Yasufumi, Tokyo 100-6150 (JP); UCHINO, Tooru, Tokyo 100-6150 (JP); HAPSARI, Wuri Andarmawanti, Tokyo 100-6150 (JP); UEKI, Atsushi, Tokyo 100-6150 (JP); AOYAGI, Kenichiro, Tokyo 100-6150 (JP); TAKAHASHI, Hideaki, Tokyo 100-6150 (JP)
(74) Representative: Hoffmann Eitle
(86) International application number: PCT/JP2013/068862
(87) International publication number: WO 2014/013919

(56) References cited:
- ERICSSON ET AL: "About DRX configuration and UE assistance", 3GPP DRAFT; R2-122587 ABOUT DRX CONFIGURATION AND UE ASSISTANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), XP050607331, [retrieved on 2012-05-15]
- NOKIA CORPORATION ET AL: "Stage 2 CR on eDDA UE assistance information", 3GPP DRAFT; 36300_CR0450R3_(REL-11)_R2-123160 STAGE 2 CR ON EDDA UE ASSISTANCE INFORMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 1 June 2012 (2012-06-01), XP050607665, [retrieved on 2012-06-01]
- SAMSUNG: "DRX configuration retention while moving from connected to Idle", 3GPP DRAFT; R2-122505_DRX_CONFIG_EDDA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 14 May 2012 (2012-05-14), XP050606957, [retrieved on 2012-05-14]
- RESEARCH IN MOTION UK LIMITED: "A Framework for Management of Background Traffic UEs", 3GPP DRAFT; R2-121609, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, South Korea; 20120326 - 20120330, 19 March 2012 (2012-03-19), XP050606087, [retrieved on 2012-03-19]
- RESEARCH IN MOTION UK LIMITED: 'A Framework for Management of Background Traffic UEs' 3GPP TSG- RAN WG2 MEETING #77BIS R2-121609 30 March 2012, XP050606087
- ZTE CORPORATION: 'Introduction of 'Power preference indication'' 3GPP TSG-RAN WG2 MEETING #79 R2-124364 17 August 2012, XP050666059
- SAMSUNG: 'DRX configuration retention while moving from connected to Idle' 3GPP TSG-RAN WG2 #78 R2-122505 25 May 2012, XP050606957
- INTEL CORPORATION: 'Signalling of UE Power Preference Indication' 3GPP TSG-RAN WG2 MEETING #79 R2-123964 17 August 2012, XP050665743

## Description

### Technical Field

The present invention relates to a mobile communication method.

### Background Art

An assembly for determining specifications of the LTE-Advanced system has reached agreement on a setting method for a mobile station UE to transmit "UE assistance information" (see non-patent literature 1).

Here, "UE assistance information" is mobile station assistance information that urges a change of parameters for a mobile station UE used in a radio base station eNB.

Specifically, a mobile station UE is configured to transmit "UE assistance information" to a radio base station eNB in a case where the mobile station UE has received a setting order signal (Configuration) from the radio base station eNB.

Incidentally, the mobile station UE is configured not to transmit "UE assistance information" to the radio base station eNB unless the mobile station UE receives the setting order signal from the radio base station eNB.

At the present time, two kinds, that is, "UE power preference" and "UE mobility information" are prescribed as the "UE assistance information."

The "UE power preference" indicates to which of "Power Saving (battery usable time)" and "Performance (delay time until service is established)" the mobile station UE wants to give priority.

Furthermore, the "UE mobility information" indicates information concerning mobility in a case where the mobile station UE is in an RRC_IDLE state.

3GPP contribution by Ericsson, "About DRX configuration and UE assistance", R2-122587, relates to DRX configuration and UE assistance. In LTE the radio network configures the UE according to the RRC protocol specification. It is proposed that the network remains in control of DRX parameter settings, yet let the network use information from the UEs when configuring the DRX parameters. The network may choose a default DRX configuration to start with and assign it to the UE, e.g. during RRC Connection Setup or Reconfiguration. The network can then provide a list of possible DRX parameter settings (e.g. containing a list of "drx-Config" IEs) in addition to that preconfiguration. The UE may select one of the offered configuration options and signal its choice to the network

### Citation List

### Non-Patent Literature

Non-patent literature 1: 3GPP contribution R2-123160

### Summary of Invention

However, in specifications of the LTE-Advanced system currently agreed on, there is a problem that an opportunity to conduct setting for the mobile station UE to transmit "UE assistance information" and a concrete sequence are not prescribed.

Furthermore, in specifications of the LTE-Advanced system currently agreed on, there is a problem that consideration is not given to whether the mobile station UE has capability of transmitting "UE assistance information" and whether the radio base station eNB has capability of accepting "UE assistance information"

Therefore, the present invention has been achieved to solve the problems. It is an object of the present invention to provide a mobile communication method capable of suitably setting transmission of "UE assistance information"

This object is accomplished by the subject-matter of the independent claims. The dependent claims describe advantageous embodiments.

A first aspect of the present invention is a mobile communication method including the steps of, when an attach process of a mobile station is conducted, causing a radio base station or a mobility management node to transmit an information element indicating whether it is suitable to transmit mobile station assistance information that urges a change of parameters for the mobile station used in the radio base station, to the mobile station, and causing the mobile station to determine whether it is suitable to transmit the mobile station assistance information to the radio base station, on the basis of the information element.

A second aspect of the present invention is a mobile communication method including the steps of, when an establishing process of a connection between a mobile station and a radio base station is conducted, causing the radio base station to transmit an information element indicating whether it is suitable to transmit mobile station assistance information that urges a change of parameters for the mobile station used in the radio base station, to the mobile station, and causing the mobile station to determine whether it is suitable to transmit the mobile station assistance information to the radio base station on the basis of the information element.

A third aspect of the present invention is a mobile communication method including the steps of, when a handover process of a mobile station is conducted, causing a handover destination radio base station to transmit an information element indicating whether it is suitable to transmit mobile station assistance information that urges a change of parameters for the mobile station used in the handover destination radio base station to a handover source radio base station, causing the handover source radio base station to transmit an information element indicating whether it is suitable to transmit mobile station assistance information that urges a change of parameters for the mobile station used in the handover destination radio base station, to the mobile station, and causing the mobile station to determine whether it is suitable to transmit the mobile station assistance information to the radio base station on the basis of the information elements.

A fourth aspect of the present invention is a mobile communication method including the steps of causing a mobile station to transmit mobile station capability information indicating whether it is possible to transmit mobile station assistance information that urges a change of parameters for the mobile station used in a radio base station, to the radio base station, causing the radio base station to transmit an information element indicating whether it is suitable to transmit the mobile station assistance information, to the mobile station on the basis of radio base station capability information indicating whether it is possible to accept the mobile station assistance information and the mobile station capability information, and causing the mobile station to determine whether it is suitable to transmit the mobile station assistance information to the radio base station on the basis of the information element.

A fifth aspect of the present invention is a mobile communication method including the steps of causing a radio base station to transmit radio base station capability information indicating whether it is possible to accept the mobile station assistance information that urges a change of parameters for a mobile station used in the radio base station, to the mobile station, and causing the mobile station to determine whether it is suitable to transmit the mobile station assistance information to the radio base station, on the basis of mobile station capability Information indicating whether it is possible to transmit the mobile station assistance information, and the radio base station capability information.

### Brief Description of Drawings

Fig. 1 is an overall configuration diagram of a mobile communication system according to a first embodiment of the present invention.
Fig. 2 is a functional block diagram of a radio base station according to the first embodiment of the present invention.
Fig. 3 is a functional block diagram of a mobility management node according to the first embodiment of the present invention.
Fig. 4 is a functional block diagram of a mobile station according to the first embodiment of the present invention.
Fig. 5 is a sequence diagram showing operations of a mobile communication system according to the first embodiment of the present invention.
Fig. 6 is a sequence diagram showing operations of the mobile communication system according to the first embodiment of the present invention.
Fig. 7 is a sequence diagram showing operations of a mobile communication system according to the first embodiment of the present invention.
Fig. 8 is a sequence diagram showing operations of a mobile communication system according to the first embodiment of the present invention.
Fig. 9 is a sequence diagram showing operations of a mobile communication system according to the first embodiment of the present invention.
Fig. 10 is a sequence diagram showing operations of a mobile communication system according to a modification 1 of the present invention.
Fig. 11 is a sequence diagram showing operations of a mobile communication system according to a modification 2 of the present invention.

### Description of Embodiment

### (Mobile communication system according to first embodiment of present invention)

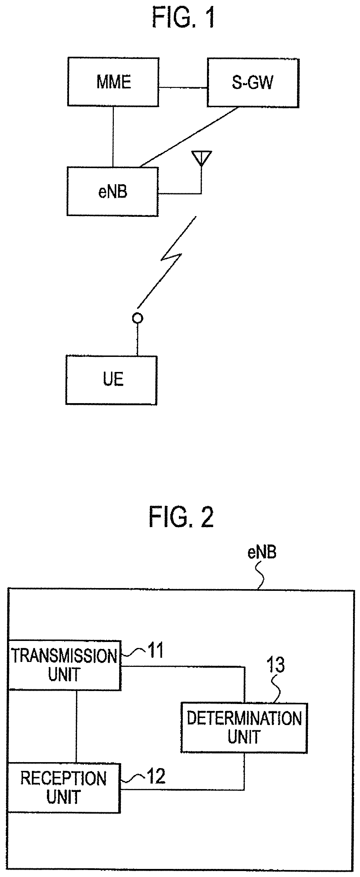

A mobile communication system according to a first embodiment of the present invention will be described with reference to Figs. 1 to 9.

The present embodiment will be described by taking a mobile communication system of an LTE-Advanced system as an example. However, the present invention is not restricted to such a mobile communication system, but it can be applied to mobile communication systems of other systems as well.

As shown in Fig. 1, the mobile communication system according to the present embodiment includes a mobility management node MME (Mobility Management Entity), a serving gateway device S-GW, a radio base station eNB, and a mobile station UE.

As shown in Fig. 2, the radio base station eNB includes a transmission unit 11, a reception unit 12, and a determination unit 13.

The transmission unit 11 is configured to transmit various signals to the mobile station UE and the mobility management node MME. The reception unit 12 is configured to receive various signals from the mobile station UE and the mobility management node MME.

For example, the transmission unit 11 may be configured to transmit an information element indicating whether it is suitable to transmit "UE assistance information" that urges a change of parameters for mobile station UE used in the radio base station eNB to the mobile station UE when an attach process of the mobile station UE is conducted.

Incidentally, the information element may be configured to indicate whether it is suitable to transmit as to each of "UE power preference" and "UE mobility information," or may be configured to indicate whether it is suitable to transmit without making a distinction between the "UE power preference" and the "UE mobility information."

In the former case, the information element can be configured using two bits. In the latter case, the information element can be configured using one bit.

Furthermore, the transmission unit 11 may be configured to transmit an information element indicating whether it is suitable to transmit "UE assistance information" to the mobile station UE when an establishing process of an RRC (Radio Resource Control) connection between the mobile station UE and the radio base station eNB is conducted.

Furthermore, the transmission unit 11 may be configured to transmit an information element indicating whether it is suitable to transmit "UE assistance information" to the mobile station UE when a release process of an RRC connection between the mobile station UE and the radio base station eNB is conducted.

Furthermore, the transmission unit 11 may be configured to transmit an information element indicating whether it is suitable to transmit "UE assistance information" to the mobile station UE when a handover process of the mobile station UE is conducted.

In addition, the transmission unit 11 may be configured to transmit an information element indicating whether it is suitable to transmit "UE assistance information" to the mobile station UE, by using SIB1 (System Information Block Type-1).

Furthermore, the reception unit 12 is configured to receive "UE assistance information" from the mobile station UE.

The determination unit 13 is configured to determine whether it is suitable to transmit "UE assistance information" for each mobile station UE.

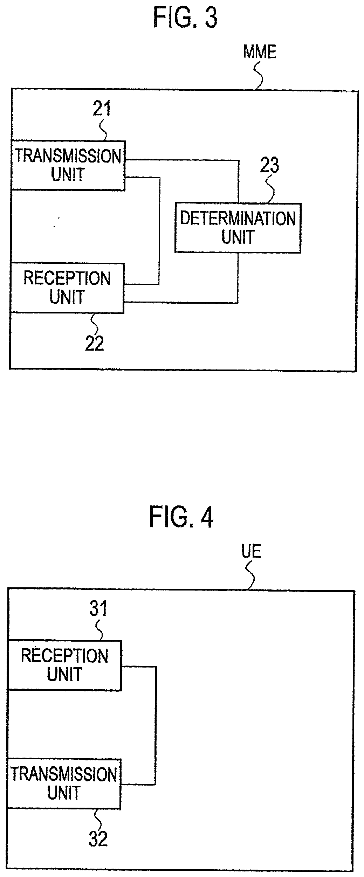

As shown in Fig. 3, the mobility management node MME includes a transmission unit 21, a reception unit 22, and a determination unit 23.

The transmission unit 21 is configured to transmit various signals to the mobile station UE and the radio base station eNB. The reception unit 22 is configured to receive various signals from the mobile station UE and the radio base station eNB.

For example, the transmission unit 21 may be configured to transmit an information element indicating whether it is suitable to transmit "UE assistance information" to the mobile station UE when an attach process of the mobile station UE is conducted.

The determination unit 23 is configured to determine whether it is suitable to transmit "UE assistance information" for each mobile station UE.

As shown in Fig. 4, the mobile station UE includes a reception unit 31 and a transmission unit 32.

The reception unit 31 is configured to receive various signals from the mobility management node MME and the radio base station eNB. The transmission unit 32 is configured to transmit various signals to the mobility management node MME and the radio base station eNB.

For example, the reception unit 31 is configured to receive an information element indicating whether it is suitable to transmit "UE assistance information" from the mobility management node MME or the radio base station eNB when an attach process of the mobile station UE is conducted.

Furthermore, the reception unit 31 may be configured to receive an information element indicating whether it is suitable to transmit "UE assistance information" from the radio base station eNB when an establishing process of an RRC connection between the mobile station UE and the radio base station eNB is conducted.

Furthermore, the reception unit 31 may be configured to receive an information element indicating whether it is suitable to transmit "UE assistance information" from the radio base station eNB when a release process of an RRC connection between the mobile station UE and the radio base station eNB is conducted.

Furthermore, the reception unit 31 may be configured to receive an information element indicating whether it is suitable to transmit "UE assistance information" from the radio base station eNB when a handover process of the mobile station UE is conducted.

In addition, the reception unit 31 may be configured to receive an information element indicating whether it is suitable to transmit "UE assistance information" from the radio base station eNB via the SIB1.

The transmission unit 32 is configured to determine whether it is suitable to transmit "UE assistance information" to the radio base station eNB on the basis of the information element received by the reception unit 31.

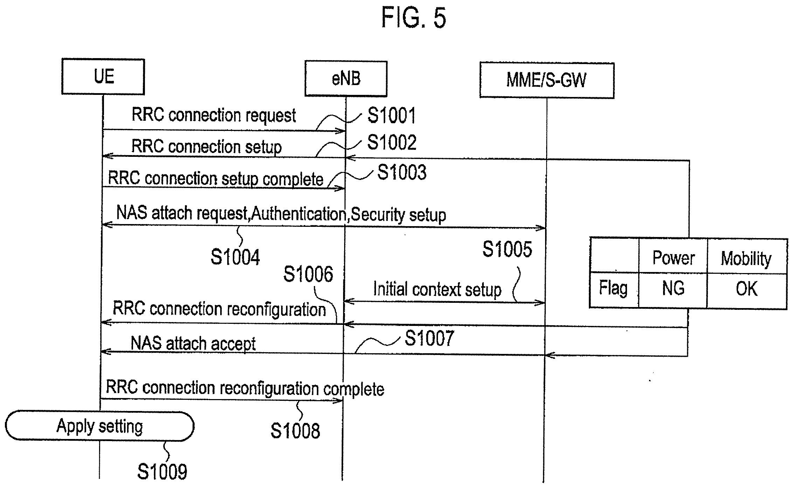

Hereafter, operations of the mobile communication system according to the present embodiment will be described with reference to Figs. 5 to 9.

First, an attach process (or location registration process/ TAU process) in the mobile communication system according to the present embodiment will be described with reference to Fig. 5.

As shown in Fig. 5, at step S1001, the mobile station UE transmits "RRC connection request" to the radio base station eNB.

At step S1002, the radio base station eNB transmits "RRC connection setup" to the mobile station UE.

Here, the radio base station eNB may give notice of an information element indicating whether it is suitable to transmit the above-described "UE assistance information" to the mobile station UE by using the "RRC connection setup."

Incidentally, in an example shown in Fig. 5, it is indicated that the information element prohibits transmission of "UE power preference" and permits transmission of "UE mobility information."

At step S1003, the mobile station UE transmits "RRC connection setup complete" to the radio base station eNB.

At step S1004, transmission and reception of "NAS attach request," and "Authentication" and "Security setup" are conducted between the mobile station UE and the mobility management node MME.

At step S1005, "Initial context setup" is conducted between the radio base station eNB and the mobility management node MME.

At step S1006, the radio base station eNB transmits "RRC connection reconfiguration" to the mobile station UE.

Here, the radio base station eNB may give notice of an information element indicating whether it is suitable to transmit the above-described "UE assistance information," to the mobile station UE by using the "RRC connection reconfiguration."

At step S1007, the mobility management node MME transmits "NAS attach accept" to the mobile station UE.

Here, the radio base station eNB may give notice of an information element indicating whether it is suitable to transmit the above-described "UE assistance information," to the mobile station UE by using the "NAS attach accept."

At step S1008, the mobile station UE transmits "RRC connection reconfiguration complete" to the radio base station eNB.

At step S1009, setting of transmission of "UE assistance information" in the mobile station UE is applied.

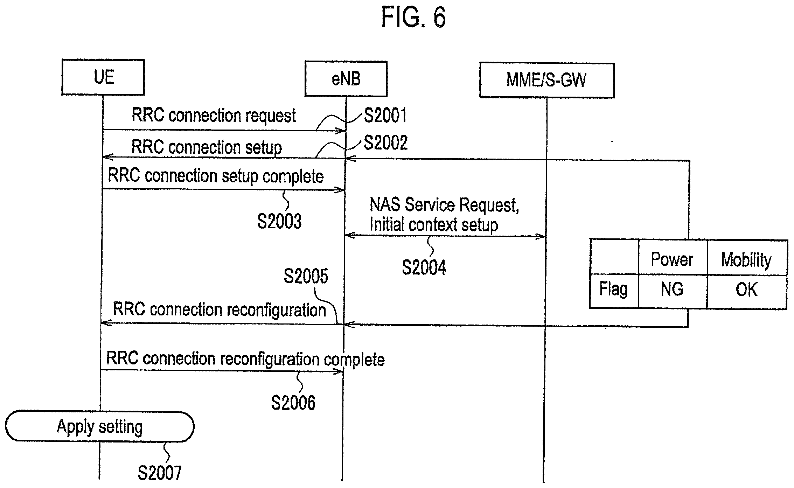

Secondly, an RRC connection establishing process (Service Request transmission process) between the mobile station UE and the radio base station eNB in the mobile communication system according to the present embodiment will now be described with reference to Fig. 6.

As shown in Fig. 6, at step S2001, the mobile station UE transmits "RRC connection request" to the radio base station eNB.

At step S2002, the radio base station eNB transmits "RRC connection setup" to the mobile station UE.

Here, the radio base station eNB may give notice of an information element indicating whether it is suitable to transmit the above-described "UE assistance information," to the mobile station UE by using the "RRC connection setup."

Incidentally, in an example shown in Fig. 6, it is indicated that the information element prohibits transmission of "UE power preference" and permits transmission of "UE mobility information."

At step S2003, the mobile station UE transmits "RRC connection setup complete" to the radio base station eNB.

At step S2004, transmission and reception of "NAS Service Request," and "Initial context setup" are conducted between the radio base station eNB and the mobility management node MME.

At step S2005, the radio base station eNB transmits "RRC connection reconfiguration" to the mobile station UE.

Here, the radio base station eNB may give notice of an information element indicating whether it is suitable to transmit the above-described "UE assistance information," to the mobile station UE by using the "RRC connection reconfiguration."

At step S2006, the mobile station UE transmits "RRC connection reconfiguration complete" to the radio base station eNB.

At step S2007, setting of transmission of "UE assistance information" in the mobile station UE is applied.

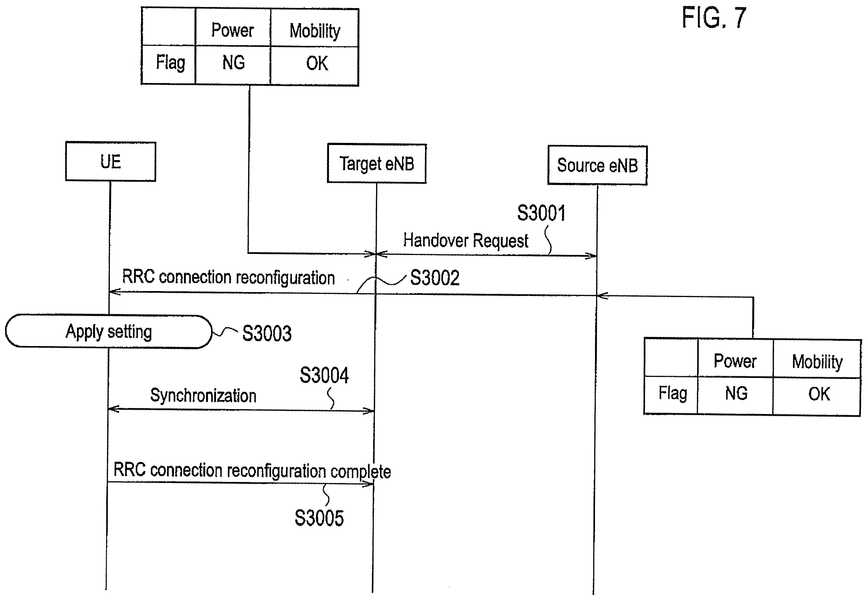

Thirdly, a handover process of the mobile station UE in the mobile communication system according to the present embodiment will now be described with reference to Fig. 7.

At step S3001, transmission and reception of "Handover Request" are conducted between a radio base station Source eNB (handover source radio base station) and a radio base station Target eNB (handover destination radio base station).

Here, the radio base station Target eNB may give notice of an information element indicating whether it is suitable to transmit the above-described "UE assistance information" to the radio base station Target eNB, to the radio base station Source eNB by using the "Handover Request."

At step S3002, the radio base station Source eNB transmits "RRC connection reconfiguration" to the mobile station UE.

Here, the radio base station Source eNB may give notice of an information element indicating whether it is suitable to transmit the above-described "UE assistance information" to the radio base station Target eNB, to the mobile station UE by using the "RRC connection reconfiguration."

Incidentally, in an example shown in Fig. 7, it is indicated that the information element prohibits transmission of "UE power preference" and permits transmission of "UE mobility information."

At step S3003, setting of transmission of "UE assistance information" in the mobile station UE is applied.

At step S3004, a synchronization process is conducted between the mobile station UE and the radio base station Target eNB. At step S3005, the mobile station UE transmits "RRC connection reconfiguration complete" to the radio base station Target eNB.

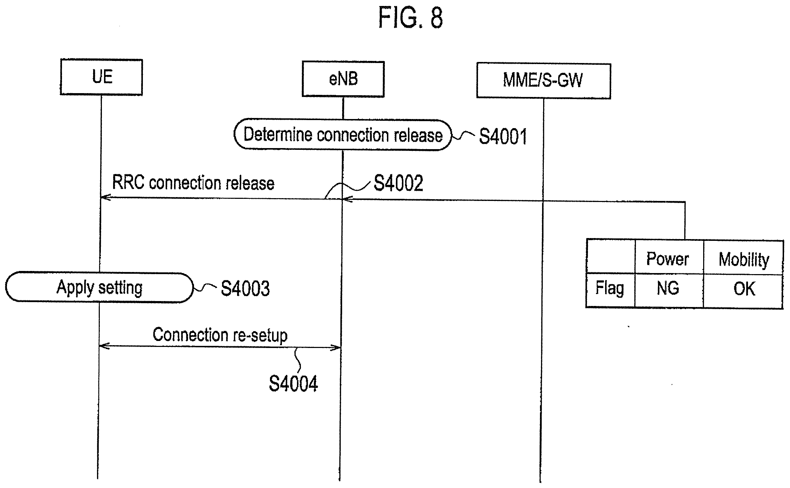

Fourthly, a release process of an RRC connection between the mobile station UE and the radio base station eNB in the mobile communication system according to the present embodiment will now be described with reference to Fig. 8.

If the radio base station eNB determines at step S4001 to conduct a release process of an RRC connection between the mobile station UE and the radio base station eNB, the radio base station eNB transmits "RRC connection release" to the mobile station UE at step S4002.

Here, the radio base station eNB may give notice of an information element indicating whether it is suitable to transmit the above-described "UE assistance information," to the mobile station UE by using the "RRC connection release."

Incidentally, in an example shown in Fig. 8, it is indicated that the information element prohibits transmission of "UE power preference" and permits transmission of "UE mobility information."

At step S4003, setting of transmission of "UE assistance information" in the mobile station UE is applied.

At step S4004, a re-setting process of an RRC connection is conducted between the mobile station UE and the radio base station eNB.

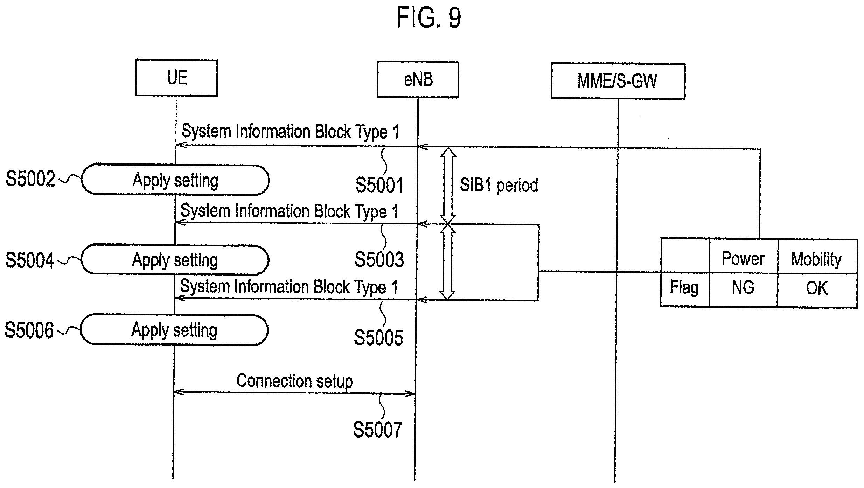

Fifthly, a transmission process of the SIB1 in the mobile communication system according to the present embodiment will now be described with reference to Fig. 9.

At step S5001/S5003/S5005, the radio base station eNB broadcasts the SIB1 with a predetermined period (SIB1 period) repeatedly.

Here, the radio base station eNB may give notice of an information element indicating whether it is suitable to transmit the above-described "UE assistance information," to the mobile station UE by using the SIB1.

Incidentally, in an example shown in Fig. 9, it is indicated that the information element prohibits transmission of "UE power preference" and permits transmission of "UE mobility information."

At each of step S5002/S5004/S5006, setting of transmission of "UE assistance information" in the mobile station UE is applied.

At step S5007, an RRC connection setting process is conducted between the mobile station UE and the radio base station eNB.

Owing to the mobile communication system according to the present embodiment, as shown in Figs. 5 to 9, it is possible to prescribe an opportunity to conduct setting for the mobile station UE to transmit "UE assistance information" and a concrete sequence.

### (Modification 1)

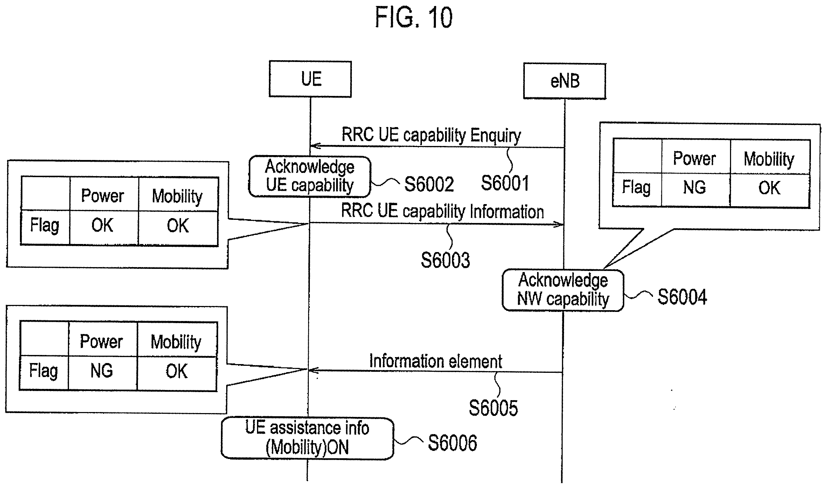

A mobile communication system according to modification 1 of the present invention will now be described with reference to Fig. 10, while paying attention to differences from the above-described mobile communication system according to the first embodiment.

In the mobile communication system according to the present modification 1, the determination unit 13 in the radio base station eNB is configured to determine whether it is suitable to transmit "UE assistance information" for each mobile station UE on the basis of "UE capability" acquired from each mobile station UE and "NW capability".

Here, "UE capability" is information indicating whether it is suitable to transmit "UE assistance information" in the mobile station UE. "NW capability" is information indicating whether it is suitable to accept "UE assistance information" in the radio base station eNB.

Incidentally, the "UE capability" and "NW capability" may be configured to indicate whether it is suitable to transmit or to accept as to each of "UE power preference" and "UE
mobility information," or may be configured to indicate whether it is suitable to transmit or to accept without making a distinction between the "UE power preference" and the "UE mobility information."

In the former case, the "UE capability" and "NW capability" can be configured using two bits. In the latter case, the "UE capability" and "NW capability" can be configured using one bit.

Hereafter, operations of the mobile communication system according to the present modification 1 will be described with reference to Fig. 10.

As shown in Fig. 10, at step S6001, the radio base station eNB transmits "RRC UE capability Enquiry" to the mobile station UE.

At step S6002, the mobile station UE ascertains whether it is suitable to transmit "UE assistance information." At step S6003, the mobile station UE transmits "RRC UE capability Information" including "UE capability" which indicates a result of the ascertainment to the radio base station eNB.

At step S6004, the radio base station eNB determines whether it is suitable to transmit "UE assistance information" for each mobile station UE on the basis of "UE capability" acquired from each mobile station UE and "NW capability."

In an example shown in Fig. 10, "UE capability" indicates that it is possible to transmit "UE power preference" and "UE mobility information," and "NW capability" indicates that it is not possible to accept "UE power preference" and it is possible to accept "UE mobility information."

At step S6005, therefore, the radio base station eNB gives notice of an information element indicating transmission prohibition of "UE power preference" and transmission permission of "UE mobility information," to the mobile station UE.

Here, the radio base station eNB can give notice of the information element by using any of the above-described methods shown in Figs. 5 to 9.

At step S6006, setting of transmission of "UE assistance information" in the mobile station UE (it is possible to transmit only "UE mobility information") is applied.

A the mobile communication system according to the present modification 1, the radio base station eNB can determine whether it is suitable to transmit "UE assistance information" for each mobile station UE on the basis of "UE capability" and "NW capability," that is, considering capability of each mobile station and capability of the radio base station eNB.

### (Modification 2)

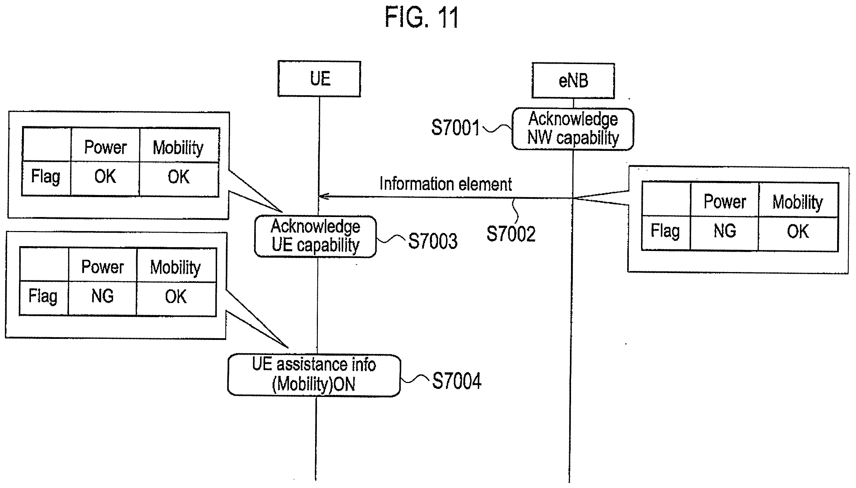

A mobile communication system according to modification 2 of the present invention will now be described with reference to Fig. 11, while paying attention to differences from the above-described mobile communication systems according to the first embodiment and the modification 1.

In the mobile communication system according to the present modification 2, the transmission unit 32 in the mobile station UE is configured to determine whether it is suitable to transmit "UE assistance information" in itself on the basis of "NW capability" acquired from the radio base station eNB and "UE capability."

Hereafter, operations of the mobile communication system according to the present modification 2 will be described with reference to Fig. 11.

As shown in Fig. 11, at step S7001, the radio base station eNB ascertains whether it is suitable to accept "UE assistance information. At step S7002, the radio base station eNB gives notice of an information element including "NW capability" which indicates a result of the ascertainment, to the mobile station UE.

Here, the radio base station eNB can give notice of the information element by using any of the above-described methods shown in Figs. 5 to 9.

At step S7003, the mobile station UE determines whether it is suitable to transmit "UE assistance information" in itself on the basis of "NW capability" acquired from the radio base station eNB and "UE capability."

In an example shown in Fig. 11, "UE capability" indicates that it is possible to transmit "UE power preference" and "UE mobility information," and "NW capability" indicates that it is not possible to accept "UE power preference" and it is possible to accept "UE mobility information."

At step S7003, therefore, the mobile station UE determines not to transmit "UE power preference" to the radio base station eNB but to transmit only "UE mobility information" to the radio base station eNB.

Owing to the mobile communication system according to the present modification 2, the mobile station UE can determine whether it is suitable to transmit "UE assistance information" in itself on the basis of "UE capability" and "NW capability," that is, considering capability of the mobile station UE itself and capability of the radio base station eNB.

Features of the present embodiment described heretofore may be represented as follows.

A first aspect of the present embodiment is a mobile communication method including the steps of, when an attach process of a mobile station UE is conducted, causing a radio base station eNB or a mobility management node MME to transmit an information element indicating whether it is suitable to transmit "UE assistance information (mobile station assistance information) that urges a change of parameters for the mobile station UE used in the radio base station eNB, to the mobile station UE, and causing the mobile station UE to determine whether it is suitable to transmit "UE assistance information" to the radio base station eNB, on the basis of the information element.

A second aspect of the present embodiment is a mobile communication method including the steps of, when an establishing process of an RRC connection between a mobile station UE and a radio base station eNB is conducted, causing the radio base station eNB to transmit an information element indicating whether it is suitable to transmit "UE assistance information to the mobile station UE, and causing the mobile station UE to determine whether it is suitable to transmit "UE assistance information" to the radio base station eNB on the basis of the information element.

A third aspect of the present embodiment is a mobile communication method including the steps of, when a handover process of a mobile station UE is conducted, causing a handover destination radio base station Target eNB to transmit an information element indicating whether it is suitable to transmit "UE assistance information" that urges a change of parameters for the mobile station UE used in the handover destination radio base station Target eNB to a handover source radio base station Source eNB, causing the handover source radio base station Source eNB to transmit an information element indicating whether it is suitable to transmit "UE assistance information" that urges a change of parameters for the mobile station UE used in the handover destination radio base station Target eNB, to the mobile station UE, and causing the mobile station UE to determine whether it is suitable to transmit "UE assistance information" to the radio base station eNB on the basis of the information elements.

A fourth aspect of the present embodiment is a mobile communication method including the steps of causing a mobile station UE to transmit "UE capability (mobile station capability information)" indicating whether it is possible to transmit "UE assistance information" to a radio base station eNB, causing the radio base station eNB to transmit an information element indicating whether it is suitable to transmit "UE assistance information" to the mobile station UE on the basis of "NW capability (radio base station capability information)" indicating whether it is possible to accept "UE assistance information" and "UE capability," and causing the mobile station UE to determine whether it is suitable to transmit "UE assistance information" to the radio base station eNB on the basis of the information element.

A fifth aspect of the present embodiment is a mobile communication method including the steps of causing a radio base station eNB to transmit "NW capability" indicating whether it is possible to accept "UE assistance information" to a mobile station UE, and causing the mobile station UE to determine whether it is suitable to transmit "UE assistance information" to the radio base station eNB on the basis of "UE capability" indicating whether it is possible to transmit "UE assistance information" and "NW capability."

Incidentally, the above-described operations of the mobile station UE, the radio base station eNB, and the mobility management node MME may be implemented by hardware, may be implemented by a software module which is executed by a processor, or may be implemented by a combination of the hardware and the software module.

The software module may be provided in a storage medium of an arbitrary form such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

Such a storage medium is connected to a processor to make it possible for the processor to read/write information from/into the storage medium. Furthermore, such a storage medium may be integrated with the processor. Furthermore, the storage medium and the processor may be provided in an ASIC. The ASIC may be provided in the mobile station UE, the radio base station eNB, and the mobility management node MME. Furthermore, the storage medium and the processor may be provided in the mobile station UE, the radio base station eNB, and the mobility management node MME as a discrete component.

Heretofore, the present invention has been described in detail by using the embodiments. However, it is apparent to those skilled in the art that the present invention is not restricted to the embodiments described in the present specification. The statements in the present specification are intended for exemplary description, and they do not have any restrictive meaning on the present invention.

### Industrial Applicability

As described heretofore, owing to the present invention, it is possible to provide a mobile communication method capable of suitably setting transmission of "UE assistance information.

### Reference Signs List

- eNB:: Radio base station
- MME:: Mobility management node
- UE:: Mobile station
- 11, 21, 32:: Transmission unit
- 12, 22, 31:: Reception unit
- 13, 23:: Determination unit

## Claims

1. A mobile communication method comprising the steps of:
causing a radio base station to transmit (S1006, S2005, S3002) an information element indicating whether it is suitable to transmit mobile station assistance information, to the mobile station by using "RRC connection reconfiguration", the mobile station assistance information including a mobile station power preference indicating whether or not the mobile station prefers a configuration that is primarily optimised for power saving; and
causing the mobile station to determine (S1009, S2007, S3003) whether it is suitable to transmit the mobile station assistance information to the radio base station on the basis of the information element.

2. The mobile communication method according to claim 1, wherein when an attach process of the mobile station is conducted, the radio base station transmits the information element to the mobile station.

3. The mobile communication method according to claim 1, wherein when an establishing process of connection between a mobile station and a radio base station is conducted, the radio base station transmits the information element to the mobile station.

4. The mobile communication method according to claim 1, wherein in a handover process of the mobile station, the radio base station transmits the information element to the mobile station.

5. The mobile communication method according to claim 1 further comprising the step of causing the mobile station to transmit (S6003) mobile station capability information indicating whether it is possible to transmit mobile station assistance information, to the radio base station,
wherein the radio base station transmits (S6005) the information element to the mobile station on the basis of the mobile station capability information.

6. A mobile station comprising:
a reception unit (31) configured to receive an information element indicating whether it is suitable to transmit mobile station assistance information, from the radio base station via "RRC connection reconfiguration", the mobile station assistance information including a mobile station power preference indicating whether or not the mobile station prefers a configuration that is primarily optimised for power saving; and
a transmission unit (32) configured to determine whether it is suitable to transmit the mobile station assistance information to the radio base station, on the basis of the information element.

7. The mobile station according to claim 6, wherein
the transmission unit (32) is configured to transmit mobile station capability information indicating whether it is possible to transmit mobile station assistance information, to the radio base station.

## Patentansprüche

1. Mobilkommunikationsverfahren, umfassend die Schritte des:
Veranlassens einer Funkbasisstation dazu, ein Informationselement, das anzeigt, ob sie zum Senden von Mobilstation-Unterstützungsinformationen geeignet ist, zu der Mobilstation unter Verwendung von "RRC-Verbindungsneukonfiguration" zu senden (S1006, S2005, S3002), wobei die Mobilstation-Unterstützungsinformationen eine Mobilstation-Energiepräferenz aufweisen, die anzeigt, ob die Mobilstation eine Konfiguration bevorzugt, die hauptsächlich zur Energieeinsparung optimiert ist, oder nicht; und
Veranlassens der Mobilstation dazu, zu bestimmen (S1009, S2007, S3003), ob sie zum Senden der Mobilstation-Unterstützungsinformationen zu der Funkbasisstation geeignet ist, auf der Grundlage des Informationselements.

2. Mobilkommunikationsverfahren nach Anspruch 1, wobei, wenn ein Anhängprozess der Mobilstation durchgeführt wird, die Funkbasisstation das Informationselement an die Mobilstation sendet.

3. Mobilkommunikationsverfahren nach Anspruch 1, wobei, wenn ein Aufbauprozess der Verbindung zwischen einer Mobilstation und einer Funkbasisstation durchgeführt wird, die Funkbasisstation das Informationselement an die Mobilstation sendet.

4. Mobilkommunikationsverfahren nach Anspruch 1, wobei in einem Übergabeprozess der Mobilstation die Funkbasisstation das Informationselement an die Mobilstation sendet.

5. Mobilkommunikationsverfahren nach Anspruch 1, weiter umfassend den Schritt des Veranlassens der Mobilstation dazu, Mobilstation-Fähigkeitsinformationen, die anzeigen, ob es möglich ist, Mobilstation-Unterstützungsinformationen zu senden, zu der Funkbasisstation zu senden (S6003),
wobei die Funkbasisstation das Informationselement zu der Mobilstation sendet (S6005), auf der Grundlage der Mobilstation-Fähigkeitsinformationen.

6. Mobilstation, umfassend:
eine Empfangseinheit (31), die dazu konfiguriert ist, ein Informationselement, das anzeigt, ob sie zum Senden von Mobilstation-Unterstützungsinformationen geeignet ist, von der Funkbasisstation über "RRC-Verbindungsneukonfiguration" zu empfangen, wobei die Mobilstation-Unterstützungsinformationen eine Mobilstation-Energiepräferenz aufweisen, die anzeigt, ob die Mobilstation eine Konfiguration bevorzugt, die hauptsächlich zur Energieeinsparung optimiert ist, oder nicht; und
eine Sendeeinheit (32), die dazu konfiguriert ist, zu bestimmen, ob sie zum Senden der Mobilstation-Unterstützungsinformationen zu der Funkbasisstation geeignet ist, auf der Grundlage des Informationselements.

7. Mobilstation nach Anspruch 6, wobei
die Sendeeinheit (32) dazu konfiguriert ist, Mobilstation-Fähigkeitsinformationen, die anzeigen, ob es möglich ist, Mobilstation-Unterstützungsinformationen zu senden, zu der Funkbasisstation zu senden.

## Revendications

1. Procédé de communication mobile comprenant les étapes consistant à :
amener une station de base radio à transmettre (S1006, S2005, S3002) un élément d'information indiquant s'il est adapté de transmettre des informations d'assistance de station mobile, à la station mobile en utilisant une "reconfiguration de connexion RRC", les informations d'assistance de station mobile comprenant une préférence de puissance de station mobile indiquant si la station mobile préfère ou non une configuration qui est principalement optimisée pour économiser de l'énergie ; et
amener la station mobile à déterminer (S1009, S2007, S3003) s'il est adapté de transmettre les informations d'assistance de station mobile à la station de base radio sur la base de l'élément d'information.

2. Procédé de communication mobile selon la revendication 1, dans lequel, lorsqu'un processus d'attache de la station mobile est réalisé, la station de base radio transmet l'élément d'information à la station mobile.

3. Procédé de communication mobile selon la revendication 1, dans lequel, lorsqu'un processus d'établissement de connexion entre une station mobile et une station de base radio est réalisé, la station de base radio transmet l'élément d'information à la station mobile.

4. Procédé de communication mobile selon la revendication 1, dans lequel dans un processus de transfert de la station mobile, la station de base radio transmet l'élément d'information à la station mobile.

5. Procédé de communication mobile selon la revendication 1, comprenant en outre l'étape consistant à amener la station mobile à transmettre (S6003) des informations de capacité de station mobile indiquant s'il est possible de transmettre des informations d'assistance de station mobile, à la station de base radio,
dans lequel la station de base radio transmet (S6005) l'élément d'information à la station mobile sur la base des informations de capacité de station mobile.

6. Station mobile comprenant :
une unité de réception (31) configurée pour recevoir un élément d'information indiquant s'il est adapté à transmettre des informations d'assistance de station mobile, depuis la station de base radio par "reconfiguration de connexion RRC", les informations d'assistance de station mobile comprenant une préférence de puissance de station mobile indiquant si la station mobile préfère ou non une configuration qui est principalement optimisée pour une économie d'énergie; et
une unité de transmission (32) configurée pour déterminer s'il est adapté de transmettre les informations d'assistance de station mobile à la station de base radio, sur la base de l'élément d'information.

7. Station mobile selon la revendication 6, dans laquelle
l'unité de transmission (32) est configurée pour transmettre des informations de capacité de station mobile indiquant s'il est possible de transmettre des informations d'assistance de station mobile, vers la station de base radio.
